# EUROPÄISCHE PATENTSCHRIFT

(11) **EP 1 425 128 B1**
(45) Veröffentlichungstag und Bekanntmachung des Hinweises auf die Patenterteilung: **03.07.2013**
(21) Anmeldenummer: 02774134.7
(22) Anmeldetag: 06.09.2002
(51) Int. Cl.: B23K 9/095

(54) **FERNREGLER FÜR EIN SCHWEISSGERÄT**
REMOTE CONTROLLER FOR A WELDING DEVICE
DISPOSITIF DE REGLAGE A DISTANCE POUR UN POSTE DE SOUDAGE

(30) Priorität: 12.09.2001 AT 14372001
(43) Veröffentlichungstag der Anmeldung: 09.06.2004
(60) Teilanmeldung: 11187996.1
(73) Patentinhaber: Fronius International GmbH, 4643 Pettenbach (AT)
(72) Erfinder: NIEDEREDER, Franz, A-4652 Fischlham (AT); PERNKOPF, Gerald, A-4573 Hinterstoder (AT); PRINZ, Andreas, A-4501 Neuhofen an der Krems (AT)
(74) Vertreter: Burger, Hannes
(86) Internationale Anmeldenummer: PCT/AT2002/000260
(87) Internationale Veröffentlichungsnummer: WO 2003/022503

(56) Entgegenhaltungen:
- EP-A- 0 865 858
- WO-A-99/58285
- DE-A- 19 602 876
- US-A- 6 002 104

## Beschreibung

Die Erfindung betrifft einen multifunktionalen Fernregler, sowie ein Verfahren zum Einstellen eines Schweißgerätes bzw. einer Schweißstromquelle durch einen multifunktionalen Fernregler, wie es in den Ansprüchen 1, 19, 20 und 21 beschrieben sind.

In der Schweißtechnologie sind verschiedenste Arten von Einstellarten bekannt, bei denen meist immer nur eine begrenzte Einstellmöglichkeit, direkt am Schweißgerät vorhanden ist. Oft ist es auch möglich, daß am Schweißgerät auch betriebsinterne Parameter oder Funktionen, die nicht durch eigene Verstellorgane an der Ein- und/oder Ausgabevorrichtungen ausgeführt sind, verstellt bzw. angeschaut werden können. Diese müssen meist durch komplizierte Vorgänge, beispielsweise durch Betätigen mehrerer Taster oder durch mehrmaliges Drücken eines Tasters, serienweise durch eine sehr komplizierte und unübersichtliche Bedienung vom Benutzer aufgerufen werden.

Dabei sind aus der AT 406 942 B, der DE 91 16 973 U 1 und der DE 92 17 846 U1 Fernregler zur Einstellung bzw. Verstellung zumindest eines Parameters bekannt, wobei hierzu der Fernregler mit den Schweißleitungen, insbesondere mit einer Schweißleitung und dem Werkstück, kontaktiert wird. Der zwischengeschaltete Fernregler wird dabei automatisch vom Schweißgerät erkannt, wodurch eine beschränkte Stromversorgung über die Schweißleitungen vom Schweißgerät gewährleistet wird. Die Verstellung am Fernregler erfolgt dabei über ein Drehrad bzw. ein Potentiometer oder über einen Taster, wobei spezielle Signale an das Schweißgerät über die Schweißleitungen übersandt werden, die anschließend im Schweißgerät ausgewertet werden und eine entsprechende Verstellung vorgenommen wird. Bei dieser Art von Fernregler ist meist nur ein einziger Schweißparameter verstellbar bzw. ist nur eine beschränkte Anzahl von Parametern einstellbar.

Weiters ist aus der DE 44 35 353 C2 eine Anordnung zur Fernsteuerung von Schweißgeräten bekannt, bei der der Fernregler über einen Lichtleiter mit dem Schweißgerät verbunden wird. Hierbei erfolgt die Datenübertragung über Lichtsignale, die im Fernregler erzeugt werden und anschließend wiederum im Schweißgerät ausgewertet werden müssen.

Aus der DE 94 15 226 U1 ist ein Fernregler für einen Automatenträger einer Schweißvorrichtung mit einem vertikalen und/oder horizontalen verfahrbaren und drehbaren Ausleger bekannt, bei dem die Datenübertragung drahtlos erfolgt. Die Steuerung für die Bewegung des Automatenträgers und/oder der Parameter der Schweißvorrichtung weist mindestens einen Sensor und einen Empfänger zur Signalauswertung auf, der von dem Fernregler drahtlos ansteuerbar ist. Bei diesem Fernregler sind verschiedenste Schaltelemente bzw. Taster zur Positionsverstellung angeordnet. Am Fernregler sind keinerlei Anzeigeelemente angeordnet, so daß der Benutzer für die Verstellung der Schweißvorrichtung bzw. des Automatenträgers für die Verstellung in Sichtkontakt mit der entsprechenden Komponente sein muß.

Weiters sind aus der DE 42 28 589 C2 , der DE 197 33 638 A1 und der DE 93 01 390 U 1 unterschiedliche Einstellvorrichtungen bzw. Verfahren zur Einstellung eines Schweißgerätes bekannt, bei denen am Schweißgerät entsprechende Einstellorgane und Anzeigeelemente angeordnet sind. Hierbei ist den einzelnen Einstellorganen zumindest ein Betriebsparameter zugeordnet. Bei diesen Einstellvorrichtungen bzw. Verfahren können immer nur jene Parameter verstellt werden, die an der Einstellvorrichtung ausgeführt sind, wobei weitere Einstellmöglichkeiten des Schweißgerätes über eine externe Steuervorrichtung, insbesondere über einen Computer, eingestellt bzw. einprogrammiert werden müssen und diese somit nicht dem Benutzer jederzeit zugänglich sind.

Weiters sind in der Schweißtechnologie noch Einstellverfahren bekannt, bei denen die Einstellung des Schweißgerätes nicht direkt am Schweißgerät erfolgt, sondern eine Einstellung über eine Schweißkomponente vorgenommen werden kann. Eine derartige Ausbildung ist in der DE 196 02 876 C2 gezeigt, bei der eine Einstellung des Schweißgerätes über einen angeschlossenen Schweißbrenner durchgeführt werden kann. Hierzu ist am Schweißgerät eine Steuervorrichtung angeordnet, bei der über mehrere Taster jeweils ein entsprechend zugeordnetes Menü für einen Parameter aufgerufen werden kann, der anschließend über den Brenner, insbesondere der Brennertaste, verändert werden kann. Bei dieser Art der Steuerung muß der Benutzer zuerst am Schweißgerät ein entsprechendes Menü aufrufen, um den zugeordneten Parameter über den Brenner verändern zu können. Zwar können hierbei verschiedenste Parameter durch Aufruf unterschiedlicher Menüs verändert werden, jedoch ist es immer nur möglich, einen einzigen Parameter nach dem anderen über den Brenner zu verändern, so daß für eine hohe Anzahl einzustellender Parameter ein sehr hoher Zeitaufwand notwendig ist.

Schließlich offenbart die WO 99/58285 A ein Verfahren zum Steuern eines Schweißgeräts beziehungsweise einer Stromquelle, bei dem über eine Ein- und/oder Ausgabevorrichtung unterschiedliche Schweißparameter, wie beispielsweise ein Schweißstrom, ein Schweißdrahtdurchmesser oder ein Schweißverfahren von einem Benutzer eingestellt werden können.

Die Schweißparameter werden an eine Steuervorrichtung übergeben, und anschließend wird das Schweißgerät beziehungsweise die Stromquelle entsprechend den vorgegebenen Schweißparametern von der Steuervorrichtung angesteuert. Der Benutzer kann vor, während und/oder nach dem Start des Schweißprozesses über die Ein- und/oder Ausgabevorrichtung eine Fläche oder einen Querschnitt einer Schweißnaht einstellen, worauf von der Steuervorrichtung hinterlegte Soll-Werte für zusätzliche Parameter zur Bildung der Schweißnaht abgefragt und/oder für den Schweißvorgang bereitgestellt beziehungsweise angezeigt werden.

Der Erfindung liegt die Aufgabe zugrunde einen multifunktionalen Fernregler zu schaffen, mit dem eine einfache Steuerung und Bedienung eines Schweißgerätes durchgeführt werden kann.

Die Aufgabe der Erfindung wird durch die Merkmale des Anspruchs 1 gelöst.

Vorteilhaft ist bei den Ausgestaltungen gemäß Anspruch 1, daß durch die menügeführte Darstellung der Parameter, Funktionen und Betriebsarten eine sehr übersichtliche und sehr einfache Bedienung des Fernreglers erreicht wird und somit auch ungeübte Benutzer bzw. Schweißer sich leicht zurecht finden und das gesamte Spektrum des Schweißgerätes nützen können. Ein weiterer Vorteil liegt darin, daß durch die Anordnung eines Speichermediums, insbesondere einer Speicherkarte, auch Einstellungen vorgenommen werden können, wenn der Fernregler nicht am Schweißgerät angeschlossen ist bzw. das der Benutzer direkt am Fernregler spezielle Einstellungen speichern kann, die er anschließend beim Verbinden des Fernreglers mit einem Schweißgerät verwenden kann. Auch ist es von Vorteil, dass in einfacher Form mehrere Schweißgeräte gleich eingestellt werden können, wobei die Einstellungen nur ein einziges Mal am Fernregler vorgenommen werden müssen.

Vorteilhaft ist auch eine Ausbildung gemäß Anspruch 2, da dadurch eine kostengünstige Baugruppe eingesetzt werden kann und auch die graphische Darstellung realisiert werden kann.

Von Vorteil ist auch eine Ausgestaltung nach Anspruch 3, da dadurch über den Fernregler alle möglichen Einstellungen vorgenommen werden können und somit eine Einstellung direkt am Schweißgerät entfallen kann.

Durch die Ausgestaltung nach Anspruch 4 wird in vorteilhafter Weise erreicht, daß durch die Anzeige von Menüpunkten, die durch Symbole graphisch dargestellt sind, sich ein Benutzer sehr leicht zurecht finden kann.

Vorteilhaft ist auch eine Ausgestaltung nach dem Anspruch 5 eine bedienerfreundliche, strukturierte Bedieneroberfläche geschaffen wird, wobei durch die Aufgliederung in zwei Ebenen eine übersichtliche und einfache Bedienung möglich ist. eine Ergänzung des Fernreglers durch neue Parameter, Betriebsarten bzw. Funktionen erfolgen kann, ohne daß dabei die Grundstruktur der Bedieneroberfläche verändert werden muß.

Durch die Ausgestaltung nach den Ansprüchen 7 und 8 wird in vorteilhafter Weise erreicht, daß eine Übersichtsliste für die Einstellungen des Schweißgerätes in der ersten Ebene, insbesondere in der Hauptebene, dargestellt wird und erst nach Auswahl eines Punktes entsprechende Einstellungen vorgenommen werden können.

Es ist auch eine Ausgestaltung nach Anspruch 9 von Vorteil, da dadurch für die Bedienung des Fernreglers nur eine beschränkte Anzahl von Schaltelementen notwendig ist, so daß eine kostengünstige Herstellung gewährleistet ist.

Von Vorteil ist auch eine Ausgestaltung nach Anspruch 10, da dadurch jederzeit aus jedem Menüpunkt in die Hauptebene zurückgekehrt werden kann und somit die Bedienerfreundlichkeit wesentlich erhöht wird.

Vorteilhaft ist auch eine Ausgestaltung nach einem der Ansprüchen 11 oder 12, da dadurch der Benutzer die Möglichkeit erhält, zusätzliche Informationen zu dem ausgewählten Menüpunkt zu erhalten und somit eine Fehleinstellung leicht vermieden werden kann.

Durch die Ausgestaltung nach den Anspruch 13 bis 15 wird in vorteilhafter Weise erreicht, daß der Benutzer immer nur auf jene Menüpunkte zugreifen kann, die für ihn freigegeben wurden.

Es ist auch ein Ausgestaltung nach Anspruch 16 von Vorteil, da dadurch in einfacher Form eine Erweiterung oder Anpassung der Struktur der Oberfläche vorgenommen werden kann und somit der Kunde sich seine eigene Oberfläche frei gestalten kann.

Von Vorteil ist auch eine Ausgestaltung nach Anspruch 17, da dadurch keinerlei Tätigkeiten für die Übertragung zum Schweißgerät notwendig sind und somit dem Benutzer das Gefühl vermittelt wird, daß er die Einstellungen direkt am Schweißgerät vorgenommen hat.

Vorteilhaft ist auch eine Ausgestaltung nach Anspruch 18, da dadurch auch eine Bedienung am Schweißgerät möglich ist.

Weiters wird die Aufgabe der Erfindung auch dadurch gelöst, daß die Einstellung und Vergabe der Berechtigung bzw. der Profile über den Fernregler erfolgt, und daß der Benutzer je nach eingestelltem Profil am Fernregler nur auf die für dieses Profil freigegebenen Menüpunkte zugreifen kann und die weiteren deaktivierten Menüpunkte ausgeblendet werden oder diese inaktiv hinterlegt werden.

Vorteilhaft ist hierbei, daß für die unterschiedlichsten Berechtigungen immer eine sehr übersichtliche Oberfläche geschaffen wird und somit die Bedienung sehr benutzerfreundlich aufgebaut ist.

Die Aufgabe der Erfindung wird jedoch auch dadurch gelöst, daß sämtliche Parameter bzw. Einstellmöglichkeiten des Schweißgerätes bzw. der Schweißstromquelle über den Fernregler eingestellt werden, wobei die Auswahl der unterschiedlichen Parameter, Funktionen und/oder Betriebsarten in zumindest zwei Ebenen, insbesondere in einer Hauptebene und einer Arbeitsebene, erfolgt und diese in Form von Menüpunkten an der Anzeigevorrichtung dargestellt werden.

Weiters wird die Aufgabe der Erfindung auch dadurch gelöst, daß bei dem Fernregler oder der Bedieneinheit durch Betätigen eines speziellen Schaltelementes, insbesondere einer Hilfetaste bzw. einer Infotaste, zu dem gerade ausgewählten Menüpunkt bzw. der ausgewählten Karteikarte ein Informationstext oder zusätzliche Parameter oder Istwerte aufgerufen werden.

Vorteilhaft ist bei dem Verfahren gemäß den Ansprüchen 20 oder 21, daß dadurch eine einfache und benutzerfreundliche Oberfläche vorhanden ist und dem Benutzer sämtliche Einstellmöglichkeiten, wie sie auch am Schweißgerät durchgeführt werden können, über den Fernregler zur Verfügung stehen. Ein weiterer Vorteil liegt darin, daß durch die menügeführte Oberfläche eine automatische Anpassung der Struktur bzw. Oberfläche, je nach Berechtigung des Benutzers, möglich ist.

Von Vorteil ist auch ein Vorgehen nach Anspruch 22, da dadurch die Änderungen bzw. Einstellung immer sofort am Schweißgerät zur Verfügung stehen und der Schweißer bzw. Benutzer jederzeit den Schweißprozeß starten kann.

Schließlich ist auch ein Vorgehen nach den Ansprüchen 23 und 24 von Vorteil, da dadurch der Benutzer jederzeit seine Einstellungen am Fernregler durchführen kann und diese anschließend beim Verbinden des Fernreglers mit dem Schweißgerät automatisch in das Schweißgerät geladen werden.

Von Vorteil ist auch ein Vorgehen nach Anspruch 25, da dadurch mit wenigen Schaltelementen eine einfache Navigation möglich ist.

Vorteilhaft sind auch die Maßnahmen gemäß dem Anspruch 26, da dadurch der Benutzer mit einem Tastendruck immer wieder in eine bestimmte Ebene bzw. zu einer bestimmten Karteikarte zurückkehren kann, was bei unterschiedlichen Ebenen zu einer wesentlichen Verbesserung der Bedienung führt.

Es ist auch ein Vorgehen nach Anspruch 27 von Vorteil, da dadurch eine leichte Bedienung möglich ist.

Von Vorteil ist auch ein Vorgehen gemäß Anspruch 28, da dadurch für die verschiedensten Karteikarten immer die möglichen Funktionen ausgewählt werden können und somit eine sehr flexible Oberflächengestaltung mit wenigen Schaltelementen erreicht werden kann.

Von Vorteil ist es auch, wenn durch Betätigen einer bestimmten Tastenkombination oder durch Betätigen eines bestimmten Schaltelementes eine Deaktivierung sämtlicher oder bestimmter Schaltelemente bzw. Einstellorgane erfolgt und somit eine Bedienung über den Fernregler oder die Bedieneinheit unterbunden und/oder eingeschränkt wird. Vorteilhaft ist hierbei, daß damit eine unbewußte Verstellung bzw. Eingabe unterbunden werden kann.

Weiters wird die Aufgabe der Erfindung dadurch gelöst, daß die Menüpunkte bzw. die Karteikarten in einer endlosen Schleife abgerufen werden oder eine bestimmte Anzahl unterschiedlicher Menüpunkte oder Karteikarten hintereinander abgerufen werden, wobei die Navigation zur Auswahl eines Menüpunktes bzw. einer Karteikarte über Schaltelemente, insbesondere über Tasten links/rechts und/oder rauf/runter, erfolgt. Vorteilhaft ist hierbei, daß eine Oberfläche übersichtlich gestaltet werden kann, wodurch die Bedienerfreundlichkeit wesentlich verbessert wird. Ein weiterer Vorteil liegt darin, daß durch das Schleifensystem eine Erweiterung durch weitere Karteikarten leicht möglich ist, da diese lediglich in die Schleife eingebunden werden müssen.

Die Erfindung wird anhand von Ausführungsbeispielen näher erläutert.

Es zeigen:
- Fig. 1: eine schematische Darstellung eines erfindungsgemäßen, multifunktionalen Schneid- und/oder Schweißgerätes;
- Fig. 2: eine schematische Darstellung des Fernreglers mit der Anzeigevorrichtung in der ersten Ebenen, insbesondere in der Hauptebene;
- Fig. 3: eine weitere schematische Darstellung des Fernreglers mit der Anzeigevorrichtung in der zweiten Ebene, insbesondere in der Arbeitsebene;
- Fig. 4: ein weiteres Ausführungsbeispiel des Fernreglers;
- Fig. 5: ein anderes Ausführungsbeispiel für die Einstellung eines Schweißgerätes.

Einführend wird festgehalten, daß gleiche Teile, Zustände bzw. Menüpunkte der Ausführungsbeispiele mit gleichen Bezugszeichen versehen werden.

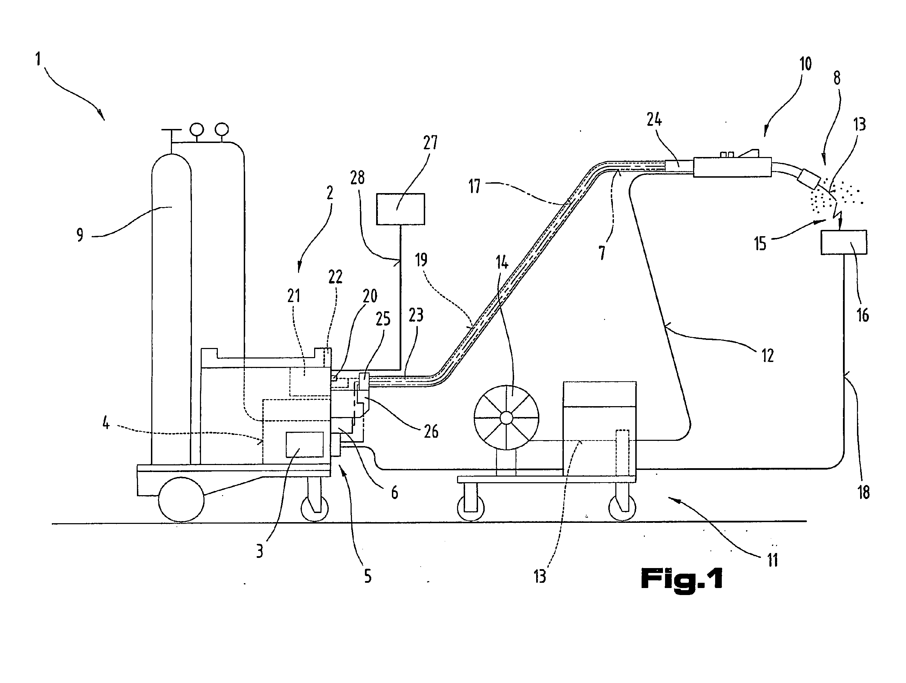

In Fig. 1 ist eine Schweißanlage bzw. ein Schweißgerät 1 mit einer am Schweißgerät 1 angeschlossene bzw. integrierte erfindungsgemäße Komponente dargestellt. Dabei ist die Schweißanlage bzw. das Schweißgerät 1 für verschiedenste Schweißverfahren, wie z.B. MIG/MAG-Schweißen bzw. WIG/TIG-Schweißen oder Elektroden-Schweißverfahren usw., dargestellt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine, für die im Wasserbehälter 21 angeordnete Flüssigkeit, verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungseinrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Weiters ist aus Fig. 1 ersichtlich, daß die erfindungsgemäße Komponente bei dem dargestellten Ausführungsbeispiel durch einen multifunktionalen Fernregler 27 gebildet ist, der über Leitungen 28 mit dem Schweißgerät 1 verbunden ist. Selbstverständlich ist es möglich, daß dieser Fernregler 27 als Bedieneinheit bzw. Ein- und/oder Ausgabevorrichtung 22 für ein Schweißgerät 1 ausgebildet sein kann, wobei diese Bedieneinheit bzw. Ein- und/oder Ausgabevorrichtung im Schweißgerät 1 integriert ist. Die Funktionen bzw. Bedienvorgänge entsprechen dabei dem beschriebenen Ausführungsbeispiel mit dem multifunktionalen Fernregler 27.

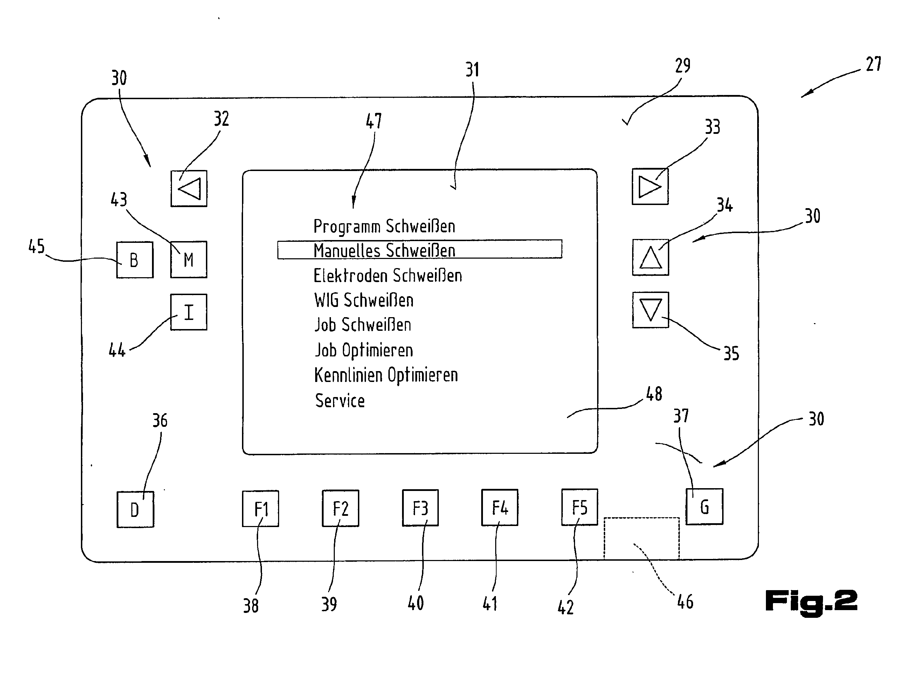

In den Fig. 2 bis 4 ist der multifunktionale Fernregler 27 für ein Schweißgerät 1 bzw. eine Schweißstromquelle 2 detailliert dargestellt, über den ein Benutzer sämtliche Parameter, Funktionen und Betriebsarten einstellen kann.

Im Folgenden sind auf eine Zusammenschau der Fig. 1-4 verwiesen. Der multifunktionale Fernregler 27 wird derart gebildet, daß in einem Gehäuse 29 mehrere Einstellelemente bzw. Schaltelemente 30, die in Form von Tastern ausgebildet sind, und ein Anzeigeelement 31, welches durch einen LCD-Schirm gebildet ist, aufweist. Die Schaltelemente 30 werden dabei derartig eingesetzt, daß diesem eine oder mehrere Funktionen zugeordnet sind. Selbstverständlich ist es auch möglich, daß andere bekannte Einstellelemente, wie beispielsweise ein Inkrementalgeber, angeordnet sein können. Dabei weist der Fernregler 27, bevorzugt jeweils eine Taste links/rechts 32, 33 zur horizontalen Navigation, jeweils eine Taste rauf/runter 34, 35 zur vertikalen Navigation, eine Taste Drahteinfädelhilfe 36, eine Taste Gasprüfung 37, mehrere, insbesondere fünf Tasten Softkeys/Speichertasten 38 bis 42 auf. An dem Fernregler 27 sind weitere spezielle Schaltelement 30, insbesondere eine Menütaste 43, eine Infotaste 44 und eine Berechtigungstaste 45, angeordnet.

Zusätzlich weist der multifunktionale Fernregler 27 einen Speicher, insbesondere eine Speicherkarte, nicht dargestellt, auf. Weiters ist zumindest eine Schnittstelle 46, insbesondere einen USB-Anschluß, die schematisch in strichlierten Linien dargestellt ist, am Fernregler 27 angeordnet, wodurch entsprechende Komponenten bzw. Geräte mit einem korrespondierenden Anschluß angeschlossen werden können und somit über den multifunktionalen Fernregler 27 ebenfalls angesteuert werden können. Damit eine Steuerung des Schweißgerätes 1 bzw. der Schweißstromquelle 2 überhaupt möglich ist, wird der multifunktionale Fernregler 27 über zumindest eine Leitung 28 mit dem Schweißgerät 1 bzw. mit der Schweißstromquelle 2 verbunden. Selbstverständlich ist es möglich, daß andere zum Stand der Technik zählende Verbindungsvorrichtungen, wie beispielsweise über Lichtleiter oder Funk, eingesetzt werden können, wobei hierzu die notwendigen Baugruppen im Gehäuse 29 des Fernreglers 27 und dem Schweißgerät 1 angeordnet sind. Bei einem Ausführungsbeispiel für eine Bedieneinheit gleicht dieser dem zuvor beschriebenen Aufbau des Fernreglers 27 mit dem einen Unterschied, daß die Bedieneinheit im Schweißgerät 1 integriert ist, so daß eine Leitungsverbindung entfallen kann bzw. die Bedieneinheit mit der Steuervorrichtung 4 des Schweißgerätes 1 verbunden ist. Da die Funktionalität sowie der Aufbau der Bedieneinheit dem Fernregler 27 gleicht, wird auf eine spezielle Beschreibung für die Bedieneinheit verzichtet.

Bei dem erfindungsgemäßen Fernregler 27 bzw. der Bedieneinheit werden die am Fernregler 27 bzw. der Bedieneinheit eingestellten Daten sofort nach Einstellung übertragen, d.h., daß bei Verstellung bzw. Einstellung einer Funktion bzw. eines Parameters die Änderungen ohne explizite Speicherung sofort aktiv sind. Selbstverständlich ist es auch möglich, daß die Daten zuerst im Fernregler 27 bzw. der Bedieneinheit gesammelt bzw. gespeichert werden und anschließend in einem Datenpaket oder mehreren Datenpaketen an das Schweißgerät 1 übergeben werden.

Die Stromversorgung des Fernreglers 27 erfolgt über die Verbindung, insbesondere über die Leitungen 28, vom Schweißgerät 1, wogegen die Bedieneinheit direkt mit dem internen Versorgungsnetz des Schweißgerätes 1 verbunden ist. Dabei ist es auch möglich, daß im Fernregler 27 eine eigene Energiequelle, beispielsweise in Form von Batterien oder Akkus bzw. einem eingebauten Netzwerk, angeordnet ist oder der Fernregler 27 mit einer eigenen Energiequelle, insbesondere einem Netzgerät, angeschlossen werden kann. Durch die unabhängige Versorgung des Fernreglers 27 wird erreicht, daß ein Betrieb des Fernreglers 27 auch ohne Schweißgerät 1 oder einer anderen Komponente möglich ist.

Sämtliche Parameter bzw. Einstellmöglichkeiten des Schweißgerätes 1 bzw. der Schweißstromquelle 2, die bei einem aus dem Stand der Technik bekanntem Schweißgerät 1 über eine am Schweißgerät 1 angeordnete Ein- und/oder Ausgabevorrichtung 22 eingestellt werden können, sowie weitere interne Parameter oder Funktion, sind auch am bzw. über den Fernregler 27 einstellbar bzw. auf diesem vorhanden. Auch die vom Schweißgerät 1 während eines Schweißprozesses aufgenommene Istwerte der einzelnen Parameter können am Fernregler 27 angezeigt und sogar visualisiert, also in Diagrammen, dargestellt werden. Dabei erfolgt die Auswahl der unterschiedlichen Parameter bzw. Einstellmöglichkeiten in Form von Menüpunkten 47, die an der Anzeigevorrichtung 31 bedienerfreundlich in Form von Symbolen und Texten dargestellt sind.

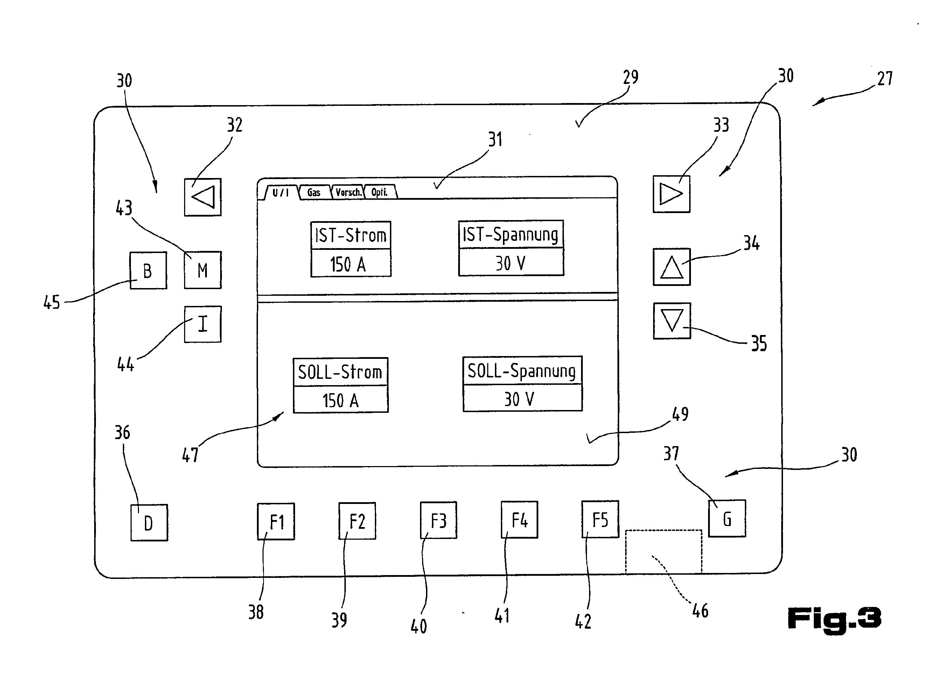

Dabei stehen bei der Aktivierung des Fernreglers 27 einem Benutzer zumindest zwei Ebenen zur Verfügung, insbesondere eine Hauptebene 48 und eine Arbeitsebene 49, wie schematisch in Fig. 2 - Hauptebene 48 - und in Fig. 3 - Arbeitsebene 49 - dargestellt, wobei in jeder Ebene unterschiedliche Menüpunkte 47 vorhanden sind, die über die Einstellelemente ausgewählt werden können. Selbstverständlich ist es möglich, daß der Arbeitsebene 49 noch weitere Unterebenen zugeordnet sein können.

Um eine sehr hohe Bedienerfreundlichkeit zu erreichen, sind in den unterschiedlichsten Ebenen eine oder mehrere Karteikarten angeordnet, in denen die Menüpunkte 47, insbesondere die Parameter, Funktionen und/oder Betriebsarten des Schweißgerätes 1, angezeigt werden und entsprechend ausgewählt bzw. eingestellt werden können, wie dies aus Fig. 3 ersichtlich ist, bei der beispielsweise vier Karteikarten angeordnet sind. Der Benutzer braucht hierzu lediglich eine Karteikarte auszuwählen, wodurch diese in den Vordergrund gestellt wird und die einzelnen Einstellmöglichkeiten sichtbar werden, d.h., daß die Karteikarten bzw. die Menüpunkte in einer endlosen Schleife abgerufen werden oder eine bestimmte Anzahl unterschiedlicher Menüpunkte oder Karteikarten hintereinander abgerufen werden, wobei die Navigation zur Auswahl eines Menüpunktes bzw. einer Karteikarte über Schaltelemente 30, insbesondere über Tasten links/rechts 32, 33 und/oder rauf/runter 34, 35, erfolgt. Dabei wird bevorzugt eine horizontale Anordnung der Karteikarten verwendet, d.h., daß mehrere Karteikarten übereinander angeordnet sind, wobei beispielsweise im oberen Bereich des Anzeigeelementes 31 jede Karteikarte über einen Teilbereich, in dem ein Symbol bzw. ein Text aufscheint, sichtbar ist, so daß der Benutzer eine beliebige Karteikarte auswählen kann, wie dies in Fig. 3 schematisch dargestellt ist. Damit wird erreicht, daß sich der Benutzer sehr einfach orientieren kann, da dieser auf einen Blick sehen kann, in welcher Karteikarte er sich gerade befindet und wie viele es in dieser Ebene überhaupt gibt. Er kann damit auch die unterschiedlichsten Ebene auf einen Blick erkennen.

In der ersten Ebene, insbesondere in der Hauptebene 49, sind die Arbeitstätigkeiten, wie beispielsweise die Menüpunkte 47 "Programm Schweißen", "manuelles Schweißen", "Elektroden Schweißen", "WIG-Schweißen", "Job Schweißen", "Job Optimieren", "Kennlinien Optimieren", "Service", angeordnet, wobei diese Menüpunkte 47 in einer Karteikarte angeordnet sind oder jeweils eine eigene Karteikarte bilden kann. Diese Menüpunkte 47 sind dabei Senkrecht untereinander angeordnet und können über die Tasten rauf/runter 34, 35 angewählt werden können. Zum Aktivieren muß der Benutzer ein entsprechendes Schaltelement 30, insbesondere eine der Tasten Softkey/Speichertaste 38 bis 42, betätigen, wodurch am Anzeigeelement 31 die zweite Ebene - Arbeitsebene 49 - angezeigt wird. In der zweiten Ebene, insbesondere in der Arbeitsebene 49, sind die zugehörigen Parameter, Wertelisten, Funktionen, usw., angeordnet, wobei diese auf mehrere Karteikarten verteilt werden können. Diese sind wiederum durch einzelne Menüpunkte 47, beispielsweise in Form von Symbolen, ausgeführt. Die Auswahl der einzelnen Menüpunkte 47 bzw. Karteikarten wird über die Tasten links/rechts 32, 33 durchgeführt, wobei bei Auswahl eines Menüpunktes 47 die dazugehörigen Parameter bzw. Einstellmöglichkeiten automatisch am Anzeigeelement 31 eingeblendet werden. Um zu diesen Parametern bzw. Einstellmöglichkeiten zu gelangen, ist es lediglich notwendig, diese mit den Tasten rauf/runter 34, 35 auszuwählen.

Um eine optimale Benutzerführung zu erreichen, wurden die beiden Schaltelemente 30 Menütaste 43 und Infotaste 44 angeordnet. Wird dabei die Menütaste 43 aktiviert, so kann von jeder Ebene bzw. von jedem Menüpunkt 47 in die Ausgangsebene, insbesondere in die erste Ebene - Hauptebene 48 - bzw. zu einer definierten Karteikarte zurück gekehrt werden. Aktiviert man hingegen das Schaltelement 30, insbesondere die Infotaste 44, so wird zu dem gerade ausgewählten Menüpunkt 47 ein Informationstext, der beispielsweise eine Beschreibung des ausgewählten Parameters oder der Funktion enthält, aufgerufen.

Bei der Auswahl des Menüpunktes 47 "Programm Schweißen" sind in der Arbeitsebene 49 unterschiedliche Schweißverfahren für Roboterschweißanlagen hinterlegt, die entsprechend angepaßt werden können. Durch Aufruf dieses Menüpunktes 47 werden beispielsweise am Schweißgerät 1 zusätzliche Komponenten aktiviert, die beispielsweise für einen Datenaustausch mit einem Roboter notwendig sind oder weitere externe Geräte angesteuert werden können.

Im Menüpunkt 47 manuelles Schweißen sind sämtliche Parameter enthalten, wie diese auf einem modernen Schweißgerät 1 vorhanden sind. Durch diesen Menüpunkt 47 kann der Benutzer eigene Schweißprozesse einstellen.

Die Menüpunkte 47 "Elektroden Schweißen" und "WIG Schweißen" entsprechen handelsübliche aus dem Stand der Technik bekannte Verfahren. Der Unterschied zu den aus dem Stand der Technik bekannten Schweißgeräten 1 liegt darin, daß nunmehr sämtliche Einstellmöglichkeiten bzw. Parameter als Menüpunkt 47 übersichtlich ausgeführt sind und nicht mehr durch mechanische Einstellmittel am Schweißgerät 1 eingestellt werden müssen.

Bei dem Menüpunkt 47 Job Schweißen ist es möglich, daß der Benutzer seinen eigenen Schweißprozeß abspeichern kann. Die Menüpunkte 47 "Job Optimieren" und "Kennlinie Optimieren" dienen zur Anpassung bereits hinterlegter oder aufgenommener Kurvenformen.

Über den multifunktionalen Fernregler 27 bzw. über die Bedieneinheit ist es auch möglich, daß für unterschiedliche Benutzer unterschiedliche Profile direkt am Fernregler 27 bzw. an der Bedieneinheit eingestellt werden können, wobei für die Einstellung der Profile der Benutzer in der Hauptebene 48 den Menüpunkt 47 "Service" aufrufen muß, so daß anschließend in der Arbeitsebene 49 die entsprechenden Berechtigungen für die einzelnen Menüpunkte 47 und/oder Karteikarten freigegeben werden können oder bereits fix vordefinierte Profile einen Benutzer zugewiesen werden. Bevorzugt wird die Einstellung der Profile durch ein Paßwort oder einer Kennung abgesichert, um Unbefugten den Zutritt zu verweigern.

Durch die Vergabe von Berechtigungen ist es nunmehr möglich, daß je nach eingestellten Profil der Benutzer nur auf die für dieses Profil freigegebene Menüpunkte 47 zugreifen kann, wobei die weiteren deaktivierten Menüpunkte 47 ausgeblendet werden oder diese inaktiv hinterlegt sind. Dadurch wird eine vereinfachte Bedienung des Fernreglers 27 erreicht, da der Benutzer nur mehr jene Menüpunkte 47 betätigen kann, die für sein Profil freigegeben sind. Damit der multifunktionale Fernregler 27 bzw. die Bedieneinheit das eingestellte Profil des Benutzers aktivieren kann, ist es notwendig, daß bei Aktivierung des Fernreglers 27 oder des Schweißgerätes, also bei der Inbetriebnahme, zuerst die Berechtigungstaste 45 betätigt werden muß, um sich anzumelden.

Durch den Einsatz eines Fernreglers 27 ist es nunmehr möglich, daß am Schweißgerät 1 keine Ein- und/oder Ausgabevorrichtung 22 bzw. Bedieneinheit mehr notwendig ist oder nur die notwendigsten Einstellelemente für die wichtigsten Parameter vorhanden sind, da alle Einstellungen über den Fernregler 27 vorgenommen werden können. Somit kann eine sehr kostengünstiges Schweißgerät 1 realisiert werden, wobei einfache Schweißprozesse auch ohne den Fernregler 27 eingestellt und durchgeführt werden können.

Es ist auch möglich, daß der Fernregler 27 während des Betriebes des Schweißgerätes 1 bzw. der Schweißstromquelle von diesem abgeschlossen und an ein weiteres im Betrieb befindlichen Schweißgerätes 1 bzw. einer im Betrieb befindlichen Schweißstromquelle 2 angeschlossen wird, wobei immer die Letzteinstellungen am Fernregler 27 gespeichert bleiben und somit diese in einfacher Form übertragen werden können. Durch ein derartiges Vorgehen können somit mehrere Schweißgeräte 1 mit dem selben Fernregler 27 eingestellt werden, wobei die Einstellungen nur ein einziges Mal durchgeführt werden müssen.

Durch die graphische Darstellung der Einstellmöglichkeiten ist es sehr einfach möglich, daß die Menüpunkte 47 bzw. die Informationsstruktur am Fernregler 27 bzw. an der Bedieneinheit jederzeit erweiterbar ist. Somit ist in einfacher Form eine Anpassung des Fernreglers 27 bzw. der Bedieneinheit auf kundenspezifische Wünsche bzw. Ausbildungen durch entsprechende Programmierung leicht möglich. Es besteht auch die Möglichkeit, daß der Benutzer sich eine eigene Oberfläche aus den verschiedensten Karteikarten bzw. Menüpunkten 47 zusammenzustellen. Dies kann beispielsweise derart erfolgen, daß der Benutzer einen Parameter, eine Funktion oder eine Betriebsart auswählt und anschließend ein Schaltelemente 30, insbesondere eine der Tasten Softkey/Speichertaste 38 bis 42, betätigt, so daß der ausgewählte Parameter oder die ausgewählte Funktion oder Betriebsart auf eine Benutzerseite, also Karteikarte, kopiert wird. So kann der Benutzer auf eine für ihn bestimmte Seite oder Karteikarte sämtliche unterschiedliche Einstellmöglichkeiten, die er am meisten braucht, ablegen.

Grundsätzlich sei noch erwähnt, daß die Datenübertragung vom Fernregler 27 zum Schweißgerät 1 bzw. von der Bedieneinheit zu Steuervorrichtung 4 und umgekehrt, bevorzugt seriell, über einen Feldbus erfolgt. Weiters ist es möglich, daß für die Benutzererkennung unterschiedliche Erkennungssysteme, wie beispielsweise ein Transpondersystem, ein Chipkartensystem, Fingerabdrucksensoren usw., eingesetzt werden können.

Es ist auch möglich, daß der Fernregler 27 bzw. das Schweißgerät 1 mit der Bedieneinheit mit einem Computer oder Laptop verbunden werden kann, wodurch zuerst die Einstellungen am Computer oder Laptop durchgeführt werden können und diese Einstellungen über den Computer oder Laptop in den Fernregler 27 bzw. in das Schweißgerät 1 eingespielt werden können. Bei der Verwendung des Fernreglers 27 werden durch Verbinden des Fernreglers 27 mit dem Schweißgerät 1 diese Einstellungen am Schweißgerät 1 übertragen bzw. wirksam. Damit ist es nicht mehr notwendig, daß der Computer bzw. Laptop am Schweißgerät 1 angeschlossen werden muß, sondern die Programmierung bzw. Einstellung spezieller Schweißprozesse am Computer oder Laptop erstellt werden und diese anschließend über den leicht tragbaren Fernregler 27 eingespielt werden können.

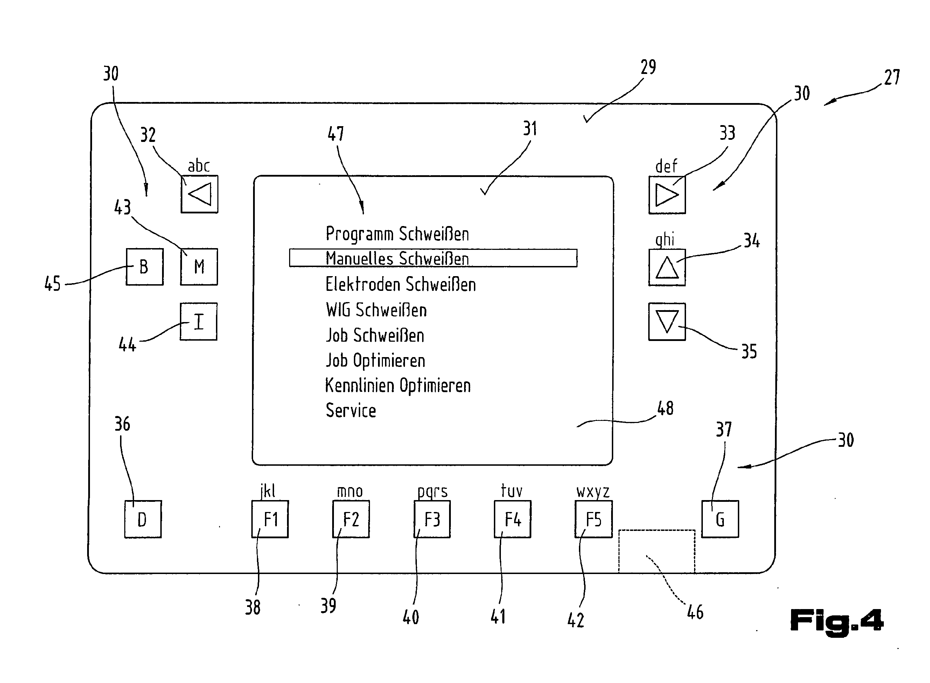

Weiters besteht die Möglichkeit, daß auch Textfelder angeordnet bzw. eingesetzt werden können. Hierzu sind den einzelnen Schaltelementen 30 entsprechende Buchstaben zugeordnet, so daß der Benutzer durch mehrmaliges Betätigen dieser Schaltelemente 30 die unterschiedlichsten Buchstaben auswählen kann. Die Erkennung, daß die Schaltelemente 30 von ihrer Grundfunktion auf den Buchstabenmodus umgeschaltet werden müssen, erfolgt dabei automatisch. Der Benutzer muß hierzu lediglich ein entsprechendes Textfeld auswählen, wodurch vom Fernregler 27, insbesondere einer darin angeordneten Steuervorrichtung, die Schaltelemente 30 in den Buchstabenmodus umschaltet und somit ein freier Text eingegeben werden kann. Damit kann in einfacher Form beispielsweise eine Paßwortabfrage realisiert werden oder es können unterschiedliche Einstellungen mit einem Text bzw. Kommentar versehen werden. Ein derartiges Beispiel ist in Fig. 4 dargestellt. Dadurch wird auch eine übersichtliche Verwaltung der gespeicherten Einstellungen bzw. der aufgenommenen Schweißprozesse möglich, da der Benutzer diese entsprechend Kennzeichnen bzw. Beschreiben kann. Selbstverständlich ist es auch möglich, daß eigene Schaltelemente 30, nicht dargestellt, für die Texteingabe angeordnet sein können oder ein Zusatzgerät, wie beispielsweise eine Tastatur, angeschlossen werden kann.

Weiters ist es möglich, daß beim Anschließen des Fernreglers 27 an das Schweißgerät 1 zuerst ein Abgleich erfolgt, so daß vom Fernregler 27 eine Anpassung der möglichen Funktionen, insbesondere der Menüpunkte 47, für das Schweißgerät 1 durchgeführt werden kann, d.h., daß durch das Anschließen ein Datenaustausch durchgeführt wird, wobei vom Schweißgerät 1 dem Fernregler 27 eine entsprechende Kennung übergeben wird und somit eine entsprechende Strukturanpassung, also eine Anpassung der möglichen Menüpunkte 47, der Karteikarten und/oder der Graphik, vorgenommen werden kann. Durch diesen Abgleich ist es möglich, daß ein Fernregler 27 bzw. eine Bedieneinheit für die unterschiedlichsten Typen von Schweißgeräten 1 verwendet werden kann, wobei am Fernregler 27 bzw. an der Bedieneinheit immer nur jene Menüpunkte 47 und/oder Karteikarten angezeigt werden, die bei diesem Schweißgerät 1 eingestellt werden können, d.h., daß vom Fernregler 27 bzw. vom Schweißgerät 1 mit der Bedieneinheit, je nach angeschlossenen Schweißgerätetyp bzw. Schweißstromquellentyp, eine entsprechende Anpassung der Oberfläche, der Karteikarten bzw. der Menüpunkte 47 durchgeführt wird.

Selbstverständlich ist es auch möglich, daß der multifunktionale Fernregler 27 bzw. die Bedieneinheit derart ausgebildet werden kann, daß anstelle des Hauptmenüs bzw. der Hauptebene 48 Schaltelemente, nicht dargestellt, insbesondere Fixtasten, angeordnet sind und somit durch Betätigen eines dieser Schaltelemente - Fixtasten - direkt in die Arbeitsebene 49 eingestiegen werden kann, d.h., daß sämtliche bzw. einige im Hauptmenü bzw. in der Hauptebene 48 angeordnete Menüpunkte 47 am Schweißgerät 1 bzw. am Fernregler 27 oder der Bedieneinheit durch die Fixtasten ausgeführt sind, bzw. diesen zugeordnet werden. Somit kann die Hauptebene 48 entfallen und der Benutzer kann direkt durch Betätigen einer Fixtaste in die Arbeitsebene 49 einsteigen und wiederum sämtliche Einstellungen vornehmen.

Bei den zuvor beschriebenen Ausführungsbeispielen ist eine unterschiedliche Navigation in den verschiedensten Ebenen beschreiben bzw. dargestellt. Dabei erfolgt in der ersten Ebene eine horizontale Navigation, wogegen in der zweiten Ebene bzw. in jeder weiteren Ebene die Navigation zwischen den Karteikarten horizontal erfolgt. Selbstverständlich ist auch eine umgekehrte Navigation möglich. Wird hingegen nur eine Ebene eingesetzt, in der mehrere Karteikarten angeordnet sind, so wird bevorzugt eine horizontale Navigation eingesetzt.

Weiters ist es bei den zuvor beschriebenen Ausführungsbeispielen möglich, daß bei Auswahl einer Karteikarte bzw. eines Menüpunktes den Schaltelementen 30 Taste Softkey/Speichertaste 38 bis 42 bestimmte Funktionen, wie beispielsweise Speichern, Übernehmen, Weiterleiten, Bestätigen usw., zugeordnet werden, so daß durch Betätigen der entsprechenden Taste(n) 38 bis 42 diese Funktion aufgerufen werden kann. Damit wird ein sehr flexibles System geschaffen, da immer nur jene Funktionen angezeigt bzw. aufgerufen werden, die für diese Karteikarte möglich sind.

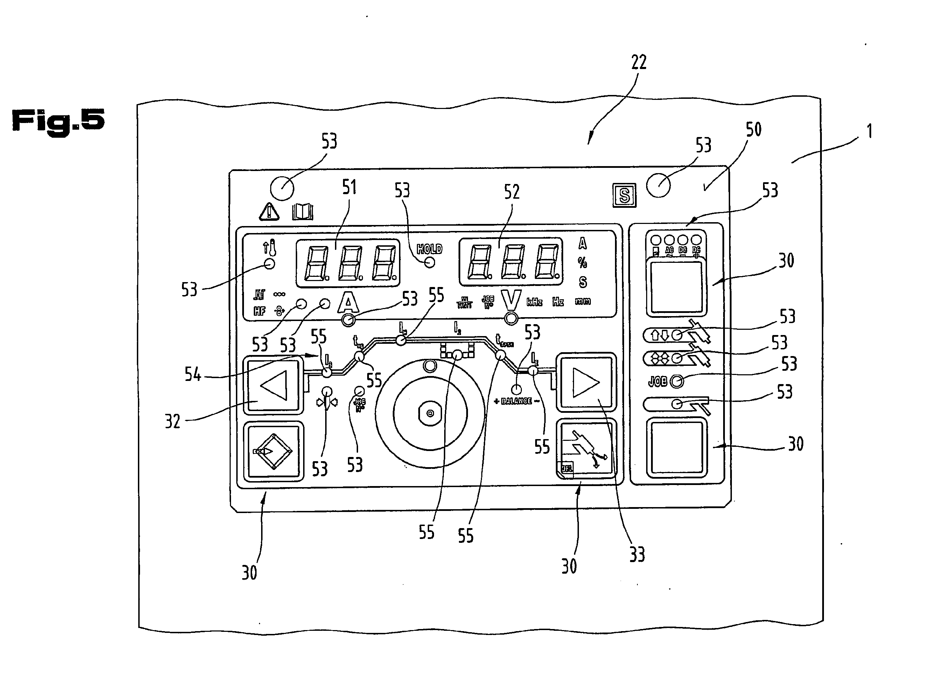

In Fig. 5 ist ein weiteres Ausführungsbeispiel zur Bedienung eines Schweißgerätes 1 gezeigt, wobei die Bedienung des Schweißgerätes direkt am Schweißgerät 1 erfolgt und nicht über den Fernregler 27 oder eine entsprechend integrierte Bedieneinheit, wie bei den zuvor angeführten Ausführungsbeispielen beschrieben, durchgeführt wird.

Bei dem gezeigten Schweißgerät 1 wird nunmehr eine übliche Ein- und/oder Ausgabeeinheit 22 eingesetzt, wobei diese aus einer Frontplatte 50, an der die Einstellorgane bzw. Schaltelemente 30 für die unterschiedlichsten Parameter bzw. Menüpunkte angeordnet sind, gebildet. Weiters ist in der Frontplatte 50 zumindest eine, bevorzugt jedoch zwei, 7segment-Anzeigen 51, 52 integriert, über die die Werte, insbesondere die Ist-Werte bzw. die Soll-Werte, der einzelnen Parameter bzw. Menüpunkte angezeigt werden. Bei dem dargestellten Ausführungsbeispielen werden die verschiedensten Funktionen bzw. Einstellmöglichkeiten in Form von Symbolen bzw. Texten an der Frontplatte 50 dargestellt, wobei diesen bzw. mehreren zusammengehörigen Einstellmöglichkeiten ein Anzeigeelement, insbesondere eine Leuchtdiode 53, zugeordnet wird, so daß durch Auswahl bzw. Selektion des Parameters die entsprechende Leuchtdiode 53 aktiviert wird.

Der wesentliche Unterschied dieses Ausführungsbeispiels zu den in Fig. 1 bis 4 beschrieben Ausführungsbeispielen liegt darin, daß bei diesem die Einstellmöglichkeiten, insbesondere einige Parameter bzw. Menüpunkte, einzeln auf der Frontplatte ausgeführt sind, wogegen bei den zuvor beschreiben Ausführungsbeispielen die Einstellmöglichkeiten an der Anzeigevorrichtung dargestellt werden, wodurch bei Änderung einer Ebene bzw. bei Auswahl einer Karteikarte die Anzeige an der Anzeigevorrichtung verändert wird.

Weiters ist an der Frontplatte 53 bei dem gezeigten Ausführungsbeispiel ein Funktionsablauf in Form einer Funktionskurve 54 dargestellt, wobei zu diesem Funktionsablauf mehrere Einstellmöglichkeiten, insbesondere Parameter bzw. Menüpunkte, eingestellt werden können. Diese einstellbaren Parameter bzw. Menüpunkte sind beispielsweise an den verschiedensten einstellbaren Stellen der Funktionskurve 54 mit weiteren Leuchtdioden 55 dargestellt, so daß durch entsprechende Auswahl die Ist- und/oder Soll-Werte an der 7segment-Anzeigen 51, 52 angezeigt werden.

Um eine bedienerfreundliche Oberfläche zu schaffen, ist es auch bei derartigen Ein- und/oder Ausgabevorrichtungen 22 möglich, die erfindungsgemäße Lösung einzusetzen, d.h., daß bei derartigen Funktionsabläufen bzw. Funktionskurven 54 eine horizontale Navigation realisiert werden kann. Selbstverständlich ist es auch möglich, daß bei entsprechender Anordnung eines Funktionsablaufes auch eine vertikale Navigation durchgeführt werden kann. Eine horizontale Navigation zu der Funktionskurve 54 wird beispielsweise derart gebildet, daß für die Auswahl bzw. die Ansteuerung der Parameter bzw. Menüpunkte in der Funktionskurve 54 entsprechende Einstellorgane, insbesondere die Tasten links/rechts 32, 33, angeordnet bzw. eingesetzt werden. Durch Betätigen eines dieser Tasten links/rechts 32, 33 kann nunmehr von einem Parameter bzw. Menüpunkt auf den nächsten Parameter bzw. Menüpunkt umgeschaltet werden, wobei immer jene Leuchtdiode 55 aktiviert wird, welcher Parameter bzw. Menüpunkt gerade ausgewählt wurde, d.h., daß die Menüpunkte bzw. die Parameter in einer endlosen Schleife abgerufen werden oder eine bestimmte Anzahl unterschiedlicher Menüpunkte bzw. Parameter hintereinander abgerufen werden, wobei die Navigation zur Auswahl eines Menüpunktes bzw. eines Parameters über Schaltelemente 30, insbesondere über Tasten links/rechts 32, 33 , erfolgt. Durch die Taster links/rechts 32, 33 kann nunmehr der Benutzer eine horizontale Navigation in beiden Richtungen durchführen.

Selbstverständlich ist es auch möglich, daß dieser Funktionsablauf bzw. die Funktionskurve 54 in einer Karteikarte, gemäß den Ausführungen der Fig. 1 bis 4, integriert bzw. angezeigt wird und somit auch eine Bedienung eines derartigen Schweißgerätes 1 über den Fernregler 27 bzw. der Bedieneinheit gemäß den Fig. 1 bis 4 möglich ist. Weiters ist es auch möglich, daß bei dieser Art der Bedienung auch eine Kombination fix ausgeführter Parameter bzw. Menüpunkte mit einem Anzeigeelement 31 (siehe Fig. 2 bis 4), insbesondere einer LCD-Anzeige, durchgeführt werden kann, wodurch es beispielsweise möglich ist, mehrere derartige Funktionsabläufe bzw. Funktionskurven 54 aufzurufen, die an der LCD-Anzeige angezeigt werden, d.h., daß beispielsweise der Bereich der Funktionskurve 54 durch eine LCD-Anzeige gebildet wird und der restliche Aufbau der Ein- und/oder Ausgabevorrichtung 22 durch fix ausgeführte Parameter bzw. Menüpunkte ausgeführt wird. Diese Ausbildung hat den Vorteil, daß dadurch eine wesentlich kleinere und somit kostengünstigere LCD-Anzeige eingesetzt werden kann, wobei jedoch eine sehr hohe Flexibilität erreicht wird, da eine Vielzahl verschiedenster Funktionskurven 54 dargestellt werden kann. Es ist natürlich auch möglich, an dieser LCD-Anzeige auch andere Einstellmöglichkeiten aufzurufen, so daß noch weitere nicht ausgeführte Parameter bzw. Menüpunkte eingestellt werden können.

Weiters ist es möglich, daß zu den zuvor beschriebenen Ausführungsbeispielen der Fig. 1 bis 5 eine Eingabesperre bzw. Tastensperre integriert ist, d.h., daß bei Aktivierung der Eingabesperre bzw. der Tastensperre keine Eingabe bzw. Verstellung am Fernregler 27 bzw. der Bedieneinheit oder der Ein- und/oder Ausgabevorrichtung 22 mehr möglich ist. Dies ist erst dann wieder möglich, wenn der Benutzer bewußt die Tastensperre aufhebt. Dadurch wird erreicht, daß eine unbewußte Verstellung nicht mehr möglich ist. Die Tastensperre kann dabei derart realisiert werden, daß durch Betätigen einer bestimmten Tastenkombination mehrerer Schaltelemente 30 oder durch Betätigen eines bestimmten Schaltelementes 30 eine Deaktivierung sämtlicher oder bestimmter Schaltelemente 30 bzw. Einstellorgane erfolgt und somit eine Bedienung über den Fernregler 27 oder die Bedieneinheit bzw. die Ein- und/oder Ausgabevorrichtung 22 unterbunden und/oder eingeschränkt wird.

Es ist auch möglich, daß diese Eingabesperre bzw. diese Tastensperre automatisch eingeleitet wird. Dies kann derartig erfolgen, daß nach Ablauf einer voreingestellten Zeit, in der keine Eingabe erfolgt, die Eingabesperre bzw. Tastensperre aktiviert wird und somit eine unbewußte Verstellung nicht mehr möglich ist, da der Benutzer zuerst die Tastensperre bewußt aufheben muß.

Weiters ist es möglich, daß das Anzeigeelement 31 durch einen Touch-Screen realisiert wird, so daß durch leichtes Aufdrücken auf die Anzeigevorrichtung 31 ein Menüpunkt oder eine Karteikarte oder Funktionen und Parameter ausgewählt werden können. Durch den Einsatz eines derartigen Touch-Screen können mehrere bzw. alle Schaltelemente 30 eingespart werden, wobei die Navigation einfach durch Drücken auf den Schirm erfolgt. Dabei ist es auch möglich, daß am Schirm eine bzw. alle Schaltelemente symbolhaft dargestellt werden.

Abschließend sei darauf hingewiesen, daß in den zuvor beschriebenen Ausführungsbeispielen einzelne Zustände bzw. Darstellungen unproportional dargestellt wurden, um das Verständnis der erfindungsgemäßen Lösung zu verbessern.

**Bezugszeichenaufstellung**

| | | | |
|---|---|---|---|
| 1 | Schweißgerät | 41 | Taste Softkey / Speichertaste |
| 2 | Stromquelle | 42 | Taste Softkey / Speichertaste |
| 3 | Leistungsteil | 43 | Menütaste |
| 4 | Steuervorrichtung | 44 | Infotaste |
| 5 | Umschaltglied | 45 | Berechtigungstaste |
| | | | |
| 6 | Steuerventil | 46 | Schnittstelle |
| 7 | Versorgungsleitung | 47 | Menüpunkt |
| 8 | Gas | 48 | Hauptebene |
| 9 | Gasspeicher | 49 | Arbeitsebene |
| 10 | Schweißbrenner | 50 | Frontplatte |
| | | | |
| 11 | Drahtvorschubgerät | 51 | 7segment-Anzeige |
| 12 | Versorgungsleitung | 52 | 7segment-Anzeige |
| 13 | Schweißdraht | 53 | Leuchtdiode |
| 14 | Vorratstrommel | 54 | Funktionskurve |
| 15 | Lichtbogen | 55 | Leuchtdiode |
| | | | |
| 16 | Werkstück | | |
| 17 | Versorgungsleitung | | |
| 18 | Versorgungsleitung | | |
| 19 | Kühlkreislauf | | |
| 20 | Strömungswächter | | |
| | | | |
| 21 | Wasserbehälter | | |
| 22 | Ein- und/oder Ausgabevorrichtung | | |
| 23 | Schlauchpaket | | |
| 24 | Verbindungseinrichtung | | |
| 25 | Zugentlastungsvorrichtung | | |
| | | | |
| 26 | Gehäuse | | |
| 27 | Fernregler | | |
| 28 | Leitung | | |
| 29 | Gehäuse | | |
| 30 | Schaltelement | | |
| | | | |
| 31 | Anzeigeelement | | |
| 32 | Taste links | | |
| 33 | Taste rechts | | |
| 34 | Taste rauf | | |
| 35 | Taste runter | | |
| | | | |
| 36 | Taste Drahteinfädelhilfe | | |
| 37 | Taste Gasprüfung | | |
| 38 | Taste Softkey / Speichertaste | | |
| 39 | Taste Softkey / Speichertaste | | |
| 40 | Taste Softkey / Speichertaste | | |

## Patentansprüche

1. Multifunktionaler Fernregler (27) für ein Schweißgerät (1) bzw. eine Schweißstromquelle (2), bei der der Fernregler (27) über zumindest eine Leitung (28) mit dem Schweißgerät (1) bzw. der Schweißstromquelle (2) verbindbar ist, wobei der Fernregler (27) Einstellelemente bzw. Schaltelemente (30) und zumindest ein Anzeigeelement (31) aufweist, wobei die Einstellung bzw. Verstellung der verschiedensten Parameter, Funktionen und/oder Betriebsarten menügeführt ist, **dadurch gekennzeichnet, daß** der Fernregler (27) einen Speicher, insbesondere eine Speicherkarte, aufweist, und daß zumindest eine zusätzliche Schnittstelle (46), insbesondere ein USB-Anschluß, angeordnet ist und der Fernregler (27) während eines Betriebes des Schweißgerätes (1) bzw. der Schweißstromquelle (2) von diesem abschließbar ist und an ein weiteres bevorzugt im Betrieb befindliches Schweißgerät (1) bzw. Stromquelle (2) anschließbar ist, wobei immer die Letzteinstellungen am Fernregler (27) gespeichert sind.

2. Fernregler nach Anspruch 1, **dadurch gekennzeichnet, daß** das Anzeigeelement (31) durch einen LCD-Schirm, insbesondere durch einen grafikfähigen LCD-Schirm, gebildet ist.

3. Fernregler nach einem der vorhergehenden Ansprüche, **dadurch gekennzeichnet, daß** sämtliche Parameter bzw. Einstellmöglichkeiten des Schweißgerätes (1) bzw. der Schweißstromquelle (2) am Fernregler (27) einstellbar sind bzw. verfügbar sind.

4. Fernregler nach einem der vorhergehenden Ansprüche, **dadurch gekennzeichnet, daß** die Auswahl der unterschiedlichen Parameter bzw. Einstellmöglichkeiten in Form von Menüpunkten (47) an der Anzeigevorrichtung (22) dargestellt sind.

5. Fernregler nach einem der vorhergehenden Ansprüche, **dadurch gekennzeichnet, daß** bei der Aktivierung des Fernreglers (27) dem Benutzer zumindest eine, bevorzugt jedoch zwei, Ebenen, insbesondere eine Hauptebene (48) und eine Arbeitsebene (49), zur Verfügung stehen, wobei unterschiedliche Karteikarten bzw. Menüpunkte (47) vorhanden sind, die über ein Einstellelement bzw. Schaltelement (30) auswählbar sind.

6. Fernregler nach einem der vorhergehenden Ansprüche, **dadurch gekennzeichnet, daß** der Arbeitsebene (49) weitere Unterebenen zugeordnet sind.

7. Fernregler nach einem der vorhergehenden Ansprüche, **dadurch gekennzeichnet, daß** in der ersten Ebenen, insbesondere in der Hauptebene (48), die einzelnen Arbeitstätigkeiten, wie beispielsweise Programmschweißen, manuelles Schweißen, Elektroden Schweißen, WIG Schweißen, Job Schweißen, Job Optimieren, Kennlinien Optimieren, Service, angeordnet sind.

8. Fernregler nach einem der vorhergehenden Ansprüche, **dadurch gekennzeichnet, daß** in der zweiten Ebene, insbesondere in der Arbeitsebene (49), die zugehörigen Parameter, Wertelisten, Funktionen angeordnet sind.

9. Fernregler nach einem der vorhergehenden Ansprüche, **dadurch gekennzeichnet, daß** der Fernregler (27) mehrere Schaltelemente (30), insbesondere jeweils eine Taste links/rechts (32, 33) zur horizontalen Navigation, jeweils eine Taste rauf/runter (34, 35) zur vertikalen Navigation, eine Taste Drahteinfädelhilfe (36), eine Taste Gasprüfung (37), mehrere insbesondere fünf Tasten Softkeys/Speichertasten (38 bis 42), aufweist.

10. Fernregler nach einem der vorhergehenden Ansprüche, **dadurch gekennzeichnet, daß** an dem Fernregler (27) ein spezielles Schaltelement (30), insbesondere eine Menütaste (43), angeordnet ist, wobei bei Aktivierung des Schaltelementes (30) von jeder Ebenen bzw. von jedem Menüpunkt (47) bzw. Karteikarte in die erste Ebene, insbesondere in die Hauptebene (48) bzw. in eine definierte Ebene bzw. Karteikarte, zurück gekehrt werden kann.

11. Fernregler nach einem der vorhergehenden Ansprüche, **dadurch gekennzeichnet, daß** an dem Fernregler (27) ein weiteres spezielles Schaltelement (30), insbesondere eine Infotaste (44), angeordnet ist, mit dem zu jedem Menüpunkt (47) bzw. Karteikarte ein Informationstext aufrufbar ist.

12. Fernregler nach einem der vorhergehenden Ansprüche, **dadurch gekennzeichnet, daß** mit dem weiteren Schaltelement (30), insbesondere der Infotaste (44), zusätzliche Parameter oder Istwerte aufrufbar sind.

13. Fernregler nach einem der vorhergehenden Ansprüche, **dadurch gekennzeichnet, daß** an dem Fernregler (27) ein weiteres Schaltelement (30), insbesondere eine Berechtigungstaste (45), angeordnet ist.

14. Fernregler nach einem der vorhergehenden Ansprüche, **dadurch gekennzeichnet, daß** für unterschiedliche Benutzer unterschiedliche Profile einstellbar sind.

15. Fernregler nach einem der vorhergehenden Ansprüche, **dadurch gekennzeichnet, daß** je nach eingestelltem Profil der Benutzer nur auf die für dieses Profil freigegebenen Menüpunkte (47) bzw. Karteikarten zugreifen kann, wobei die weiteren deaktivierten Menüpunkte (47) bzw. Karteikarten ausgeblendet werden oder diese inaktiv hinterlegt sind.

16. Fernregler nach einem der vorhergehenden Ansprüche, **dadurch gekennzeichnet, daß** die Menüpunkte (47), Karteikarten bzw. die Informationsstruktur jederzeit erweiterbar ist, und somit auf kundenspezifische Ausbildungen oder Wünschen anpaßbar ist.

17. Fernregler nach einem der vorhergehenden Ansprüche, **dadurch gekennzeichnet, daß** bei Verstellung bzw. Einstellung einer Funktion bzw. eines Parameters die Änderung ohne expliziete Speicherung sofort aktiv sind.

18. Fernregler nach einem der vorhergehenden Ansprüche, **dadurch gekennzeichnet, daß** der Fernregler (27) im Schweißgerät eingebaut und von diesem abnehmbar ist.

19. Verfahren zum Einstellen eines Schweißgerätes (1) bzw. einer Schweißstromquelle (2) durch einen multifunktionalen Fernregler (27), gemäß den vorhergehenden Ansprüchen 1 bis 18, bei dem über den Fernregler (27) unterschiedliche Parameter, Funktionen und/oder Betriebsarten für das Schweißgerät (1) eingestellt werden, und für die verschiedensten Benutzer unterschiedliche Berechtigungen vergeben werden, **dadurch gekennzeichnet, daß** die Einstellung und Vergabe der Berechtigung bzw. der Profile über den Fernregler (27) erfolgt, und daß der Benutzer je nach eingestelltem Profil oder Berechtigung nur auf die für dieses Profil freigegebenen Menüpunkte (47) bzw. Daten zugreifen kann und die weiteren deaktivierten Menüpunkte (47) ausgeblendet oder inaktiv hinterlegt werden.

20. Verfahren zum Einstellen eines Schweißgerätes (1) bzw. einer Schweißstromquelle (2) durch einen multifunktionalen Fernregler (27), gemäß den vorhergehenden Ansprüchen 1 bis 18, bei dem über den Fernregler (27) unterschiedliche Parameter, Funktionen und/ oder Betriebsarten für das Schweißgerät (1) eingestellt werden, **dadurch gekennzeichnet, daß** sämtliche Parameter bzw. Einstellmöglichkeiten des Schweißgerätes (1) bzw. der Schweißstromquelle (2) über den Fernregler (27) eingestellt werden, wobei die Auswahl der unterschiedlichen Parameter, Funktionen und/oder Betriebsarten in zumindest einer Ebene, bevorzugt jedoch zwei Ebenen, insbesondere in einer Hauptebene (48) und einer Arbeitsebene (49), erfolgt und diese in Form von Menüpunkten (47) und/oder Karteikarten an der Anzeigevorrichtung dargestellt werden.

21. Verfahren zum Einstellen eines Schweißgerätes (1) bzw. einer Schweißstromquelle (2) durch einen multifunktionalen Fernregler (27), gemäß den vorhergehenden Ansprüchen 1 bis 18, bei dem über den Fernregler (27) unterschiedliche Parameter, Funktionen und/oder Betriebsarten für das Schweißgerät (1), insbesondere für einen Schweißprozeß, eingestellt werden, **dadurch gekennzeichnet, daß** beim Fernregler (27) durch Betätigen eines speziellen Schaltelementes (30), insbesondere einer Hilfetaste bzw. einer Infotaste (44), zu einem ausgewählten Menüpunkt (47) bzw. der ausgewählten Karteikarte ein Informationstext oder zusätzliche Parameter oder Istwerte aufgerufen und angezeigt werden.

22. Verfahren nach Anspruch 19, 20 oder 21, **dadurch gekennzeichnet, daß** bei einer Verstellung oder Einstellung ohne expliziete Speicherung die Änderungen an das Schweißgerät (1) übertragen werden.

23. Verfahren nach Anspruch 19, 20 oder 21, **dadurch gekennzeichnet, daß** bei einer Einstellung der Parameter, Funktionen und/oder Betriebsarten am Fernregler (27) ohne angeschlossenes Schweißgerät (1) bzw. Schweißstromquelle (2) die Änderungen automatisch im Fernregler (27) gespeichert werden.

24. Verfahren nach Anspruch 23, **dadurch gekennzeichnet, daß** bei Anschluß des Fernreglers (27) an das Schweißgerät (1) bzw. die Schweißstromquelle (2) eventuell gespeicherte Daten bzw. Änderungen automatisch übertragen werden.

25. Verfahren nach einem der Ansprüche 19 bis 24, **dadurch gekennzeichnet, daß** bei Betätigung der Schaltelemente (30) unterschiedliche Funktionen bzw. Abläufe durchgeführt werden, wobei zumindest eine Taste links/rechts (32, 33) zur horizontalen Navigation und jeweils eine Taste rauf/runter (34, 35) zur vertikalen Navigation, eingesetzt werden.

26. Verfahren nach einem der Ansprüche 19 bis 25, **dadurch gekennzeichnet, daß** bei Aktivierung des Schaltelementes (30), insbesondere der Menütaste (43), von jeder Ebene bzw. von jedem Menüpunkt (47) bzw. Karteikarte in die erste Ebene, insbesondere in die Hauptebene (48) bzw. in eine definierte Ebene bzw. Karteikarte, zurückgekehrt wird.

27. Verfahren nach einem der Ansprüche 19 bis 26, **dadurch gekennzeichnet, daß** in der ersten Ebene eine vertikale Navigation erfolgt, wogegen in der zweiten Ebene bzw. in jeder weiteren Ebene die Navigation zwischen den einzelnen Karteikarten horizontal erfolgt.

28. Verfahren nach einem der Ansprüche 19 bis 27, **dadurch gekennzeichnet, daß** bei Auswahl eines Menüpunktes (47) bzw. einer Karteikarte den Schaltelementen (30), insbesondere der Taste Softkey/Speichertaste (38 bis 42), bestimmte Funktionen zugeordnet werden.

29. Verfahren nach einem der Ansprüche 19 bis 28, **dadurch gekennzeichnet, daß** durch Betätigen einer bestimmten Tastenkombination oder durch Betätigen eines bestimmten Schaltelementes (30) eine Deaktivierung sämtlicher oder bestimmter Schaltelemente (30) bzw. Einstellorgane erfolgt und somit eine Bedienung über den Fernregler (27) unterbunden und/oder eingeschränkt wird.

## Claims

1. Multi-functional remote controller (27) for a welding apparatus (1) and a welding current source (2), which remote controller (27) can be connected to the welding apparatus (1) and the welding current source (2) via at least one line (28) with the remote controller (27) having setting elements or switching elements (30) and at least one display unit (31), with the various parameters, functions and/or operating modes being set or adjusted by means of a menu driven system, **characterized in that** the remote controller (27) has a memory, in particular a memory card and that at least one additional interface (46), in particular a USB terminal is provided and, during operation of the welding apparatus (1) and the welding current source (2), the remote controller (27) can be disconnected from the latter and can be connected to another welding apparatus (1) and current source (2), which are preferably in operation, with always the last setting entered being stored in the remote controller (27).

2. Remote controller according to claim 1, **characterized in that** the display unit (31) is an LCD screen, in particular an LCD screen with graphics capability.

3. Remote controller according to one of the preceding claims, **characterized in that** all parameters and setting options for the welding apparatus (1) and the welding current source (2) can be set from and are available at the remote controller (27).

4. Remote controller according to one of the preceding claims, **characterized in that** the selection of different parameters and setting options is presented on the display device (22) in form of menu items (47).

5. Remote controller according to one of the preceding claims, **characterized in that** when the remote controller (27) is activated, at least one, but preferably two levels, in particular a main level (48) and a working level (49), are available to the user, with different tabs or menu items (47) being available that can be selected by means of a setting element or switching element (30).

6. Remote controller according to one of the preceding claims, **characterized in that** additional sub-levels are allocated to the working level (49).

7. Remote controller according to one of the preceding claims, **characterized in that** the individual work activities, such as programme welding, manual welding, electrode welding, WIG welding, job welding, job optimisation, characteristic curve optimisation, service, are disposed in the first levels, in particular in the main level (48).

8. Remote controller according to one of the preceding claims, **characterized in that** the associated parameters, lists of values and functions are disposed in the second level, in particular in the working level (49).

9. Remote controller according to one of the preceding claims, **characterized in that** the remote controller (27) has several switching elements (30), in particular respective left/right buttons (32, 33) for horizontal navigation, respective up/down buttons (34, 35) for vertical navigation, a wire inserting aid button (36), a gas check button (37), several, in particular five, soft key/memory key buttons (38 to 42).

10. Remote controller according to one of the preceding claims, **characterized in that** special switching element (30), in particular a menu button (43), is arranged on the remote controller (27), and it is possible to return to the first level, in particular to the main level (48) or a defined level or tab from each of the levels or from every menu item (47) or tab when the switching element (30) is activated.

11. Remote controller according to one of the preceding claims, **characterized in that** another special switching element (30), in particular an info button (44), is provided on the remote controller (27), by means of which textual information about every menu item (47) or every tab can be retrieved.

12. Remote controller according to one of the preceding claims, **characterized in that** the other switching element (30), in particular the info button (44), can be used to retrieve additional parameters or actual values.

13. Remote controller according to one of the preceding claims, **characterized in that** a further switching element (30), in particular an authorisation button (45), is disposed on the remote controller (27).

14. Remote controller according to one of the preceding claims, **characterized in that** different profiles can be set up for different users.

15. Remote controller according to one of the preceding claims, **characterized in that**, according to the profile set up, the user can only access those menu items (47) and tabs authorised for that profile, with the other deactivated menu items (47) and tabs not being displayed or shown as disabled.

16. Remote controller according to one of the preceding claims, **characterized in that** the menu items (47), tabs or information structure can be extended at any time and can thus be adapted to customer-specific configurations or requirements.

17. Remote controller according to one of the preceding claims, **characterized in that** when a function or a parameter is set or adjusted, the change immediately becomes effective without explicitly having to save it.

18. Remote controller according to one of the preceding claims, **characterized in that** the remote controller (27) is incorporated into the welding apparatus and can be removed from the latter.

19. Method of setting up a welding apparatus (1) and a welding current source (2) by means of a multi-functional remote controller (27) according to one of the preceding claims 1 to 18, whereby various parameters, functions and/or operating modes for the welding apparatus (1) are set via the remote controller (27) and different authorisations are allocated to the different users, **characterized in that** the authorisations or profiles are set up and allocated via the remote controller (27) and that the user, depending on the authorisation or profile set up, can access only those menus items (47) and data authorised for this profile, and the other disabled menu items (47) are not displayed or are shown as disabled.

20. Method of setting up a welding apparatus (1) and a welding current source (2) by means of a multi-functional remote controller (27) according to the preceding claims 1 to 18, whereby various parameters, functions and/or operating modes of the welding apparatus (1) are set via the remote controller (27), **characterized in that** all parameters and setting options of the welding device (1) and the welding current source (2) are set via the remote controller (27), with the selection of different parameters, functions and/or operating modes being made in at least one, but preferably two, levels, in particular a main level (48) and a working level (49) and these being presented on the display unit in the form of menu items (47) and/or tabs.

21. Method of setting up a welding apparatus (1) and a welding current source (2) by means of a multi-functional remote controller (27) according to one of the preceding claims 1 to 18, whereby various parameters, functions and/or operating modes for the welding apparatus (1), in particular for a welding process are set via the remote controller (27), **characterized in that** by operating a special switching element (30), in particular a help button or an info button (44) on the remote controller, textual information or additional parameters or actual values relating to a selected menu item (47) or the selected tab are retrieved and displayed.

22. Method according to claim 19, 20 or 21, **characterized in that** when a setting is entered or edited, the changes are transmitted to the welding apparatus (1) without explicit storage.

23. Method according to claim 19, 20 or 21, **characterized in that** if parameters, functions and/or operating modes are set at the remote controller (27) when it is not connected to a welding apparatus (1) and a welding current source (2), the changes are automatically stored in the remote controller (27).

24. Method according to claim 23, **characterized in that** when the remote controller (27) is connected to the welding apparatus (1) and the welding current source (2), any data and changes stored are automatically transmitted.

25. Method according to one of the claims 19 to 24, **characterized in that** when the switching elements (30) are operated, different functions or sequences are executed, with at least one left/right button (32, 33) for horizontal navigation and one respective up/down button (34, 35) for vertical navigation being used.

26. Method according to one of the claims 19 to 25, **characterized in that** when the switching element (30), in particular the menu button (43), is activated, it is switched from every level or from every menu item (47) or tab back to the first level, in particular the main level (48) or into a defined level or tab.

27. Method according to one of the claims 19 to 26, **characterized in that** a vertical navigation takes place in the first level, whereas in the second level or in every other level, the navigation between the individual tabs takes place horizontally.

28. Method according to one of the claims 19 to 27, **characterized in that** when a menu item (47) or a tab is selected, specific functions are assigned to switching elements (30), in particular the soft key/memory key button (38 to 42).

29. Method according to one of the claims 19 to 38, **characterized in that** when a specific combination of buttons is operated or when a specific switching element (30) is operated, all or specific switching elements (30) or setting elements are disabled and an operation via the remote controller (27) is therefore prevented and/or restricted.

## Revendications

1. Dispositif de réglage à distance (27) multifonctionnel pour un poste de soudage (1) ou une source de courant de soudage (2), dans lequel le dispositif de réglage à distance (27) peut être relié via au moins une ligne (28) au poste de soudage (1) ou à la source de courant de soudage (2), ledit dispositif de réglage à distance (27) comportant des éléments de réglage ou éléments de commande (30) et au moins un élément d'affichage (31), le réglage ou l'ajustage des paramètres, fonctions et/ou modes de fonctionnement les plus variés étant commandés au moyen de menus, **caractérisé en ce que** ledit dispositif de réglage à distance (27) comporte une mémoire, en particulier une carte mémoire, et **en ce qu'**il est prévu au moins une interface (46) supplémentaire, en particulier un port USB, et ledit dispositif de réglage à distance (27) peut être déconnecté du poste de soudage (1) ou de la source de courant de soudage (2) pendant le fonctionnement de ceux-ci et peut être raccordé à un autre poste de soudage (1) ou une autre source de courant de soudage (2) qui, de préférence, sont en cours de service, les derniers réglages étant toujours mémorisés sur le dispositif de réglage à distance (27).

2. Dispositif de réglage à distance selon la revendication 1, **caractérisé en ce que** l'élément d'affichage (31) est formé par un écran LCD, en particulier par un écran LCD compatible aux tracés graphiques.

3. Dispositif de réglage à distance selon l'une quelconque des revendications précédentes, **caractérisé en ce que** tous les paramètres, plus précisément toutes les possibilités de réglage du poste de soudage (1) ou de la source de courant de soudage (2) peuvent être réglés sur le dispositif de réglage à distance (27) ou sont disponibles sur celui-ci.

4. Dispositif de réglage à distance selon l'une quelconque des revendications précédentes, **caractérisé en ce que** les différents paramètres ou possibilités de réglage à sélectionner sont représentés sous forme de points de menu (47) sur le dispositif d'affichage (22).

5. Dispositif de réglage à distance selon l'une quelconque des revendications précédentes, **caractérisé en ce que**, lors de l'activation du dispositif de réglage à distance (27), l'utilisateur dispose d'au moins un, de préférence deux niveaux, en particulier un niveau principal (48) et un niveau de travail (49), différents enregistrements de données ou différents points de menu (47) étant disponibles, lesquels peuvent être sélectionnés par l'intermédiaire d'un élément de réglage ou élément de commande (30).

6. Dispositif de réglage à distance selon l'une quelconque des revendications précédentes, **caractérisé en ce que** des sous-niveaux supplémentaires sont associés au niveau de travail (49).

7. Dispositif de réglage à distance selon l'une quelconque des revendications précédentes, **caractérisé en ce que** dans le premier niveau, en particulier le niveau principal (48), sont agencées les différents types de travail, tels que le soudage programmé, le soudage manuel, le soudage par électrodes, le soudage TIG, le soudage par lots, l'optimisation des tâches, l'optimisation des courbes caractéristiques, le service.

8. Dispositif de réglage à distance selon l'une quelconque des revendications précédentes, **caractérisé en ce que** dans le deuxième niveau, en particulier dans le niveau de travail (49), sont agencés les paramètres correspondants, les listes des valeurs opératoires, les fonctions.

9. Dispositif de réglage à distance selon l'une quelconque des revendications précédentes, **caractérisé en ce que** ledit dispositif de réglage à distance (27) comporte plusieurs éléments de commande (30), en particulier respectivement une touche gauche/droite (32, 33) pour la navigation horizontale, respectivement une touche vers le haut/le bas (34, 35) pour la navigation verticale, une touche d'aide à l'enfilage du fil (36), une touche de contrôle du gaz (37), plusieurs, en particulier cinq touches programmables/touches de mémoire (38 à 42).

10. Dispositif de réglage à distance selon l'une quelconque des revendications précédentes, **caractérisé en ce que** sur ledit dispositif de réglage à distance (27) est agencé un élément de commande (30) spécial, en particulier une touche de menu (43), l'activation de l'élément de commande (30) permettant de retourner de chaque niveau ou de chaque point de menu (47) ou enregistrement de données vers le premier niveau, en particulier vers le niveau principal (48) ou vers un niveau défini ou un enregistrement de données défini.

11. Dispositif de réglage à distance selon l'une quelconque des revendications précédentes, **caractérisé en ce que** sur ledit dispositif de réglage à distance (27) est agencé un élément de commande (30) spécial supplémentaire, en particulier une touche d'information (44) qui permet d'afficher un texte d'information pour chaque point de menu (47) ou enregistrement de données.

12. Dispositif de réglage à distance selon l'une quelconque des revendications précédentes, **caractérisé en ce que** l'élément de commande (30) supplémentaire, en particulier la touche d'information (44) permet d'afficher des paramètres ou valeurs réelles supplémentaires.

13. Dispositif de réglage à distance selon l'une quelconque des revendications précédentes, **caractérisé en ce que** sur ledit dispositif de réglage à distance (27) est agencé un élément de commande (30) supplémentaire, en particulier une touche d'autorisation (45).

14. Dispositif de réglage à distance selon l'une quelconque des revendications précédentes, **caractérisé en ce que** différents profils peuvent être réglés pour différents utilisateurs.

15. Dispositif de réglage à distance selon l'une quelconque des revendications précédentes, **caractérisé en ce que**, en fonction du profil d'utilisateur réglé, il est possible d'accéder uniquement aux points de menu (47) ou enregistrements de données validés pour ce profil, les autres points de menu (47) ou enregistrements de données désactivés étant affichés en gris ou ceux-ci étant stockés sous forme inactive.

16. Dispositif de réglage à distance selon l'une quelconque des revendications précédentes, **caractérisé en ce que** les points de menu (47), les enregistrements de données, plus précisément la structure d'information peut être élargie à tout moment et peut donc être adaptée à des modes de réalisation ou demandes spécifiques du client.

17. Dispositif de réglage à distance selon l'une quelconque des revendications précédentes, **caractérisé en ce qu'**en cas d'ajustage ou de réglage d'une fonction ou d'un paramètre, la modification est active immédiatement sans stockage explicite dans la mémoire.

18. Dispositif de réglage à distance selon l'une quelconque des revendications précédentes, **caractérisé en ce que** ledit dispositif de réglage à distance (27) est intégré dans le poste de soudage et peut être désolidarisé de celui-ci.

19. Procédé permettant le réglage d'un poste de soudage (1) ou d'une source de courant de soudage (2) au moyen d'un dispositif de réglage à distance (27) multifonctionnel selon les revendications précédentes 1 à 18, selon lequel ledit dispositif de réglage à distance (27) permet de régler différents paramètres, fonctions et/ou modes de fonctionnement pour le poste de soudage (1) et d'attribuer des autorisations différentes aux différents utilisateurs, **caractérisé en ce que** le réglage et l'attribution de l'autorisation ou des profils sont effectués par l'intermédiaire du dispositif de réglage à distance (27), et ce que l'utilisateur, en fonction du profil ou de l'autorisation réglée, peut accéder uniquement aux points de menu (47) ou données validés pour ce profil et les autres points de menu (47) désactivés sont affichés en gris ou sont stockés sous forme inactive.

20. Procédé permettant le réglage d'un poste de soudage (1) ou d'une source de courant de soudage (2) au moyen d'un dispositif de réglage à distance (27) multifonctionnel selon les revendications précédentes 1 à 18, selon lequel ledit dispositif de réglage à distance (27) permet de régler différents paramètres, fonctions et/ou modes de fonctionnement pour le poste de soudage (1), **caractérisé en ce que** tous les paramètres, plus précisément toutes les possibilités de réglage du poste de soudage (1) ou de la source de courant de soudage (2) sont réglés au moyen du dispositif de réglage à distance (27), la sélection des différents paramètres, fonctions et/ou modes de fonctionnement étant effectuée dans au moins un niveau, de préférence cependant dans deux niveaux, en particulier dans un niveau principal (48) et dans un niveau de travail (49), et ceux-ci étant représentés sous la forme de points de menu (47) et/ou d'enregistrements de données sur le dispositif d'affichage.

21. Procédé permettant le réglage d'un poste de soudage (1) ou d'une source de courant de soudage (2) au moyen d'un dispositif de réglage à distance (27) multifonctionnel selon les revendications précédentes 1 à 18, selon lequel ledit dispositif de réglage à distance (27) permet de régler différents paramètres, fonctions et/ou modes de fonctionnement pour le poste de soudage (1), en particulier pour un processus de soudage, **caractérisé en ce que** l'activation d'un élément de commande (30) spécial, en particulier une touche d'aide ou une touche d'information (44) relative à un point de menu (47) sélectionné ou à un enregistrement de données sélectionné, permet d'afficher et de visualiser sur le dispositif de réglage à distance (27) un texte d'information ou des paramètres ou valeurs réelles supplémentaires.

22. Procédé selon la revendication 19, 20 ou 21, **caractérisé en ce que** lors d'un ajustage ou réglage sans stockage explicite dans la mémoire, les modifications sont transmises au poste de soudage (1).

23. Procédé selon la revendication 19, 20 ou 21, **caractérisé en ce que** lors d'un réglage des paramètres, fonctions et/ou modes de fonctionnement sur le dispositif de réglage à distance (27) sans que le poste de soudage (1) ou la source de courant de soudage (2) soient raccordés, les modifications sont automatiquement stockées dans la mémoire du dispositif de réglage à distance (27).

24. Procédé selon la revendication 23, **caractérisé en ce que** lors du raccordement du dispositif de réglage à distance (27) au poste de soudage (1) ou à la source de courant de soudage (2), des données ou modifications éventuellement stockées en mémoire sont automatiquement transmises.

25. Procédé selon l'une quelconque des revendications 19 à 24, **caractérisé en ce que** l'activation des éléments de commande (30) permet de mettre en oeuvre différentes fonctions ou différents déroulements de programme, au moins une touche gauche/droite (32, 33) pour la navigation horizontale et respectivement une touche vers le haut/le bas (34, 35) pour la navigation verticale étant utilisées.

26. Procédé selon l'une quelconque des revendications 19 à 25, **caractérisé en ce que** l'activation de l'élément de commande (30), en particulier la touche de menu (43), permet de retourner de chaque niveau ou de chaque point de menu (47) ou enregistrement de données vers le premier niveau, en particulier vers le niveau principal (48), ou vers un niveau défini ou un enregistrement de données défini.

27. Procédé selon l'une quelconque des revendications 19 à 26, **caractérisé en ce que** dans le premier niveau s'effectue une navigation verticale, alors que dans le deuxième niveau ou dans chaque niveau supplémentaire s'effectue la navigation horizontale entre les différents enregistrements de données.

28. Procédé selon l'une quelconque des revendications 19 à 27, **caractérisé en ce que** lors de la sélection d'un point de menu (47) ou d'un enregistrement de données, des fonctions déterminées sont associées aux éléments de commande (30), en particulier à la touche programmable/touche de mémoire (38 à 42).

29. Procédé selon l'une quelconque des revendications 19 à 28, **caractérisé en ce que** l'activation d'une combinaison de touches déterminée ou par l'activation d'un élément de commande (30) déterminé entraîne une désactivation de tous les éléments de commande (30) ou organes de réglage ou de certains éléments de commande (30) ou organes de réglage déterminés et, de ce fait, la commande via le dispositif de réglage à distance (27) devient impossible et/ou est limitée.
